# EUROPEAN PATENT APPLICATION

(11) **EP 4 462 584 A1**
(43) Date of publication of application: **13.11.2024**
(21) Application number: 23894910.1
(22) Date of filing: 14.11.2023
(51) Int. Cl.: H01M 50/552, H01M 50/24, H01M 50/503, H01M 50/507, H01M 50/308, H01M 50/249

(54) **BATTERY MODULE WITH IMPROVED FLAME PATH, AND BATTERY PACK COMPRISING SAME**

(30) Priority: 21.11.2022 KR 20220156556
(71) Applicant: LG Energy Solution, Ltd., Seoul 07335 (KR)
(72) Inventor: LEE, Jung-Hoon, Daejeon 34122 (KR); PARK, Min-Soo, Daejeon 34122 (KR)
(74) Representative: Plasseraud IP
(86) International application number: PCT/KR2023/018275
(87) International publication number: WO 2024/111981

(57) **Abstract**

A battery module according to the present disclosure may include: a cell stack accommodated inside a case body having at least one open side and including a plurality of battery cells stacked and disposed in one direction; a bus-bar frame assembly including a bus-bar frame disposed at the front or rear of the cell stack, and a plurality of bus-bars mounted to the bus-bar frame and electrically connected to electrode leads of the battery cells; and an end cover coupled to the open end of the case body so as to cover the bus-bar frame assembly, wherein the plurality of bus-bars may include a bus-bar terminal having an upper end exposed to the outside at least to be higher than the upper surface of the case body and configured to function as a module terminal, and wherein the end cover may be configured such that the upper end of the bus-bar terminal is partially exposed therethrough.

## Description

### TECHNICAL FIELD

The present disclosure relates to a battery module, and more specifically, it relates to a battery module that modifies, in case of internal ignition of the battery module, a flame path produced in the ignited battery cells to minimize thermal damage to neighboring battery cells.

The present application claims priority to Korean Patent Application No. 10-2022-0156556 filed on November 21, 2022 in the Republic of Korea, the disclosures of which are incorporated herein by reference.

### BACKGROUND ART

Semi-permanent batteries that convert electrical energy into chemical energy and can be repeatedly charged and discharged are called secondary batteries distinguished from primary batteries that cannot be reused after use.

Secondary batteries include lithium secondary batteries, nickel-cadmium Ni-Cd batteries, lead-acid batteries, nickel-metal hydrogen (Ni-MH) batteries, zinc-air batteries, and alkaline manganese batteries. Among these, lead-acid batteries and lithium secondary batteries are the most widely commercialized secondary batteries.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells is connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. In addition, since the battery module has a structure in which the secondary batteries are intensively stored inside a module housing, if any one secondary battery becomes a trigger cell due to heat propagation, heat and flame may quickly transfer to surrounding secondary batteries, so that the secondary batteries are more likely to ignite in succession.

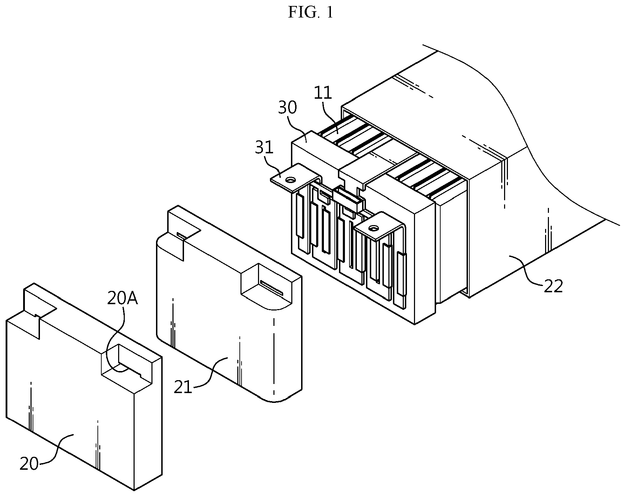

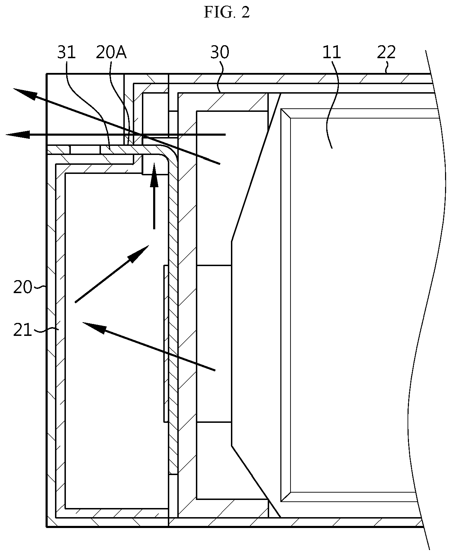

FIG. 1 is an exploded perspective view of a cell stack, a bus-bar frame, an insulating cover, and an end cover of a conventional battery module, and FIG. 2 is a diagram schematically illustrating the ignition path of flame when the battery module ignites.

Referring to FIGS. 1 and 2, the conventional battery module includes a module case 22, an insulating cover 21, and an end cover 20, and the end cover 20 has an opening 20A through which a terminal bus-bar 31 is exposed through the opening 20A.

However, when an event such as ignition occurs in the battery cell 11, high-temperature heat, gas, and flame form a flame path shown in FIG. 2 through the openings 20A formed in the end cover 30, thereby causing thermal damage to other neighboring battery modules. (In particular, in the case of a battery pack including multiple battery modules, if the battery modules are disposed adjacent to each other such that the module terminals are adjacent to each other for convenience of connection between battery modules, thermal damage would be significant.)

Accordingly, it is urgent to improve the flame path by changing the structure of the bus-bar terminal 31 and the end cover 20, thereby minimizing damage to neighboring battery cells.

### DISCLOSURE

### Technical Problem

The present disclosure has been designed to solve the problems of the related art, and therefore the present disclosure is directed to providing a battery module capable of minimizing damage to neighboring battery cells by improving a flame path by modifying the structure of the terminal bus-bar and the end cover.

The technical problems that the present disclosure seeks to solve are not limited to the above-mentioned problems, and other problems not mentioned above will be clearly understood by those skilled in the art from the description of the invention below.

### Technical Solution

According to one aspect of the present disclosure, there is provided a battery module according to the present disclosure may include: a cell stack accommodated inside a case body having at least one open side and including a plurality of battery cells stacked and disposed in one direction; a bus-bar frame assembly including a bus-bar frame disposed at the front or rear of the cell stack, and a plurality of bus-bars mounted to the bus-bar frame and electrically connected to electrode leads of the battery cells; and an end cover coupled to the open end of the case body so as to cover the bus-bar frame assembly, wherein the plurality of bus-bars may include a bus-bar terminal having an upper end exposed to the outside at least to be higher than the upper surface of the case body and configured to function as a module terminal, and wherein the end cover may be configured such that the upper end of the bus-bar terminal is partially exposed therethrough.

The bus-bar terminal may include: a terminal body mounted to the bus-bar frame and electrically connected to the electrode lead of the battery cell; and a bending terminal portion bent and extended from the top of the terminal body toward the center of the cell stack or the inside of the case body.

The bending terminal portion may be provided to protrude upwards to be higher than the upper surface of the case body.

The end cover may have a protrusion accommodation portion configured to protrude higher than the bending terminal portion and accommodate the bending terminal portion.

The bending terminal portion may have a guide slot formed on the plate surface thereof to guide the discharge of flame.

The protrusion accommodation portion may have an upper opening on both sides of the case body in the width direction.

The protrusion accommodation portion adjacent to the upper opening may include: a first protruding step formed to protrude upwards between the tip of the end cover and the bending terminal portion; a pair of second protruding steps disposed perpendicular to the first protruding step and provided to protrude on both sides with the upper opening located therebetween; and a fitting member configured to connect the second protruding steps to each other and provided between the bending terminal portion and the case body.

The fitting member may have a tapered section.

According to another aspect of the present disclosure, there is provided a battery pack including one or more battery modules described above.

According to another aspect of the present disclosure, there is provided a vehicle including the battery pack.

### Advantageous Effects

According to one aspect of the present disclosure, it is possible to provide a battery module capable of minimizing damage to neighboring battery cells by improving the flame path by modifying the structure of the terminal bus-bar and the end cover.

That is, in the battery module according to the present disclosure, the opening through which the bus-bar terminal is exposed may be removed from the end cover plate and relocated on the upper side of the case body, while the bus-bar terminal may also be bent to be exposed to the upper surface of the case body. This structural change of the bus-bar terminal and the relocation of the opening of the end cover may improve the flame path such that flame or the like generated from battery cells is directed toward the center of the cell stack, thereby minimizing damage to neighboring battery cells and delaying chain ignition or explosion of immediately neighboring battery cells as long as possible.

### DESCRIPTION OF DRAWINGS

The accompanying drawings illustrate a preferred embodiment of the present disclosure and, together with the detailed description of the invention, serve to provide further understanding of the technical idea of the present disclosure, and thus the present disclosure is not construed as being limited to the drawings.
FIG. 1 is an exploded perspective view of a bus-bar frame, an insulating cover, and an end cover of a conventional battery module.
FIG. 2 is a diagram schematically illustrating the ignition path of flame when the battery module ignites.
FIG. 3 is a perspective view of a battery module equipped with a bus-bar terminal and an end cover according to an embodiment of the present disclosure.
FIG. 4 is a front view of a battery module equipped with a bus-bar terminal and an end cover according to an embodiment of the present disclosure.
FIG. 5 is a perspective view of a bus-bar terminal of a battery module according to an embodiment of the present disclosure.
FIG. 6 is a partially perspective view of a battery module in which a bus-bar terminal and an end cover are coupled according to an embodiment of the present disclosure.
FIG. 7 is a longitudinal cross-sectional view of a battery module in which a bus-bar terminal and an end cover are coupled according to an embodiment of the present disclosure.
FIG. 8 is an enlarged view of the upper section in FIG. 7.
FIG. 9 is a diagram illustrating a flame ignition path by a bus-bar terminal and an end cover of a battery module according to an embodiment of the present disclosure.
FIG. 10 is a top view illustrating the directions of flames in battery modules according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

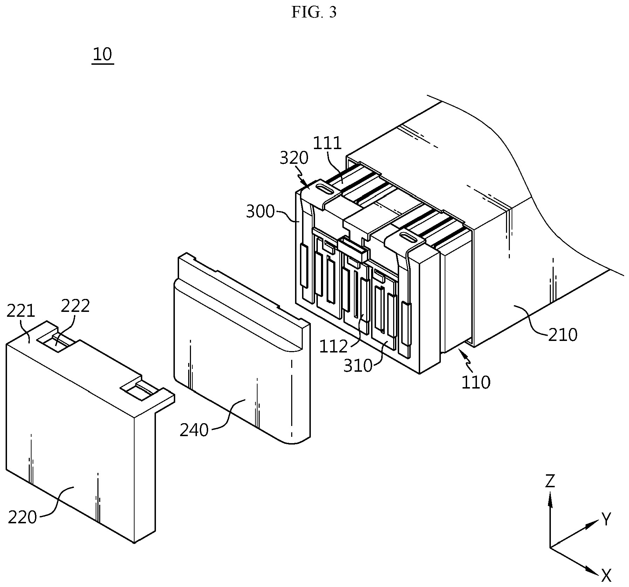

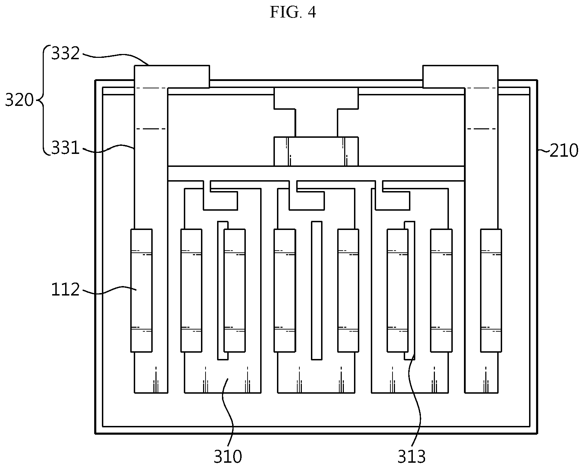

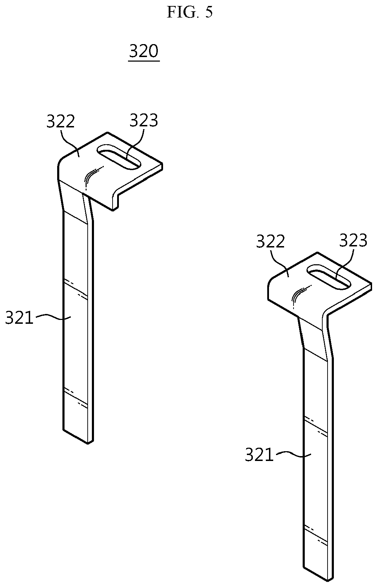

FIG. 3 is a perspective view of a battery module equipped with a bus-bar terminal and an end cover according to an embodiment of the present disclosure, FIG. 4 is a front view of a battery module equipped with a bus-bar terminal and an end cover according to an embodiment of the present disclosure, and FIG. 5 is a perspective view of a bus-bar terminal of a battery module according to an embodiment of the present disclosure.

Referring to these drawings, a battery module 10 according to an embodiment of the present disclosure includes a cell stack 110, a bus-bar frame assembly including a bus-bar frame 300 disposed at the front or rear of the cell stack 110 and a plurality of bus-bars mounted to the bus-bar frame, and module cases 210 and 220.

As shown in FIG. 3, the module cases according to this embodiment include a case body 210 that accommodates the cell stack 110 and an end cover 220 that covers the open end of the case body 210.

The case body 210 is configured in the form of a square tube having open ends at both ends thereof in the longitudinal direction and an empty hollow formed therein so that the cell stack 110 may be inserted into the same in the longitudinal direction. That is, the case body 210 may be configured to insert the cell stack 110 thereinto by sliding or press-fitting. The case body 210 is an element for protecting the cell stack 110 from external impact or the like, and may preferably be made of a material with excellent mechanical rigidity.

The end cover 220 may be placed to face one face of the cell stack 110 where electrode leads 112 of the battery cells 111 are provided to prevent the electrode leads 112 fixed to the bus-bars 310 of the bus-bar frame 300 from being exposed to the outside, and may be coupled to the open end of the case body 210. The end cover 220 serves to protect the bus-bar frame 300 and various electrical components connected thereto from external impact. For example, the end cover 220 may be configured to have an insulating cover on the inner side and a metal material on the outer side, and may be fixedly coupled to the case body 210 by welding or the like.

The cell stack 110 is a collection of battery cells 111 configured by stacking a plurality of battery cells 111 to be electrically connected to each other. That is, as shown in FIG. 3, the cell stack 110 may be a collection of a plurality of pouch-type battery cells 111 stacked in one direction (the X-axis direction) with the wide sides thereof in an upright state.

The pouch-type battery cell 111 includes an electrode assembly, a pouch case that accommodates the electrode assembly, and a pair of electrode leads 112 that is connected to the electrode assembly and extends to the outside of the pouch case to function as electrode terminals. The pair of electrode leads 112 extend toward both ends of the battery cell 111, that is, in the longitudinal direction (the ±Y-axis direction).

If necessary, the pouch-type battery cell 111 may be configured such that the electrode leads 112 are located only at one end thereof in the Y-axis direction, for example, at the end in the -Y-axis direction. Meanwhile, the present disclosure is not limited to a specific type or form of battery cell 111, and various battery cells 111 known at the time of filing the present disclosure may be used to constitute the cell stack 110 of the present disclosure.

The bus-bar frame assembly may include a bus-bar frame 300 disposed at the front or rear of the cell stack 110 and a plurality of bus-bars 310 mounted to the bus-bar frame 300 and electrically connected to the electrode leads of the battery cell 111.

The plurality of bus-bars may include a bus-bar terminal 320 configured such that the upper end thereof is exposed to the outside at least to be higher than the upper surface of the case body 210 and configured to function as a module terminal.

As shown in FIGS. 3 and 4, the bus-bar frame 300 is configured as a plate-shaped body having a size capable of covering the front (+Y-axis direction) or the rear (-Y-axis direction) of the cell stack 110. The bus-bar frame 300 may have a plurality of lead slots through which the electrode leads 112 of the pouch-type battery cells 111 pass in the +Y-axis or -Y-axis direction, and the plurality of lead slots may be provided in the stacking direction (X-axis direction) of the battery cells 111. Accordingly, the electrode leads 112 may pass through the lead slots. This bus-bar frame 300 may be located on one face of the cell stack 110 so as to cover the battery cell stack 110 and guide the connection between the cell stack 110 and external devices. Specifically, at least one of the bus-bar 310, the bus-bar terminal 320, and a module connector (not shown) may be mounted to the bus-bar frame 300.

This bus-bar frame 300 may include an electrically insulating material. The bus-bar frame 300 may be configured to restrict the bus-bar 310 or bus-bar terminal 320 from coming into contact with the battery cell 111, excluding the portions where the bus-bar 310 or bus-bar terminal 320 is connected to the electrode lead 112, thereby preventing short circuits.

As shown in FIG. 4, the bus-bar 310 is provided between a pair of lead slots, and a pair of electrode leads 112 exposed through the lead slots is bent toward the central bus-bar 310 and then fixed to the surface of the bus-bar 310 by welding, establishing an electrical connection therebetween. A plurality of bus-bars 310 is arranged along the stacking direction in which the battery cells 111 are stacked. The plurality of bus-bars 310 is made of an electrically conductive material such as metal, for example, copper, aluminum, nickel, or the like, and is electrically connected to the electrode leads 112.

Meanwhile, the conventional bus-bar terminal 31 shown in FIGS. 1 and 2 is formed to be bent toward the front or rear of the cell stack 11 and exposed to the outside through the opening of the end cover 20, serving as a terminal. Accordingly, when an event such as ignition occurs in the battery cell 11, high-temperature heat, gas, and flame are discharged through the openings 20A formed on the end cover 22 as shown in FIG. 2 and form a direct flame path to the front or rear of the cell stack, causing thermal damage to other neighboring battery modules (not shown).

Therefore, in this embodiment, as shown in FIG. 3, the opening formed toward the front (+Y-axis direction) or rear (-Y-axis direction) of the cell stack 110 is removed from the end cover 220, and an upper opening 222 is formed toward the upper side of the case body 210, and the bus-bar terminal 320 extends such that the upper end thereof is exposed to the outside at least to be higher than the upper surface of the case body 210 to function as a module terminal, thereby guiding the flame to be discharged through the upper opening 222.

To this end, the bus-bar terminal 320, as shown in FIGS. 4 and 5, may include a terminal body 321 that is mounted to the bus-bar frame 300 and electrically connected to the electrode lead 112 of the battery cell 111, and a bending terminal portion 322 that extends to be bent from the top of the terminal body 321 toward the center of the cell stack 110 or the inside of the case body 210.

The terminal body 321 is mounted to the bus-bar frame 300 and electrically connected to the electrode lead 112 of the battery cell 111. One end of the terminal body 321 may be electrically connected to the bus-bar frame 300, and the other end (top end) may extend long to the upper surface of the case body 210.

The bending terminal portion 322 is provided at the top of the terminal body 321, and the bending terminal portion 322 is formed to protrude upwards to be higher than the upper surface of the case body 210. The bending terminal portion 322 may be made integrally with the terminal body 321, and is provided to be bent toward the center of the cell stack 110. In addition, the width of the bending terminal portion 322 is greater than that of the terminal body 321 to facilitate a terminal function.

The bending terminal portion 322 has a guide slot 323 formed on the plate surface thereof to guide the discharge of flame. The guide slot 323 may be a guide passage in the upward direction for the flame path for venting gas or flame generated to the front (+Y-axis direction) or rear (-Y-axis direction) of the cell stack 110 when an event occurs, which will be described in detail in the description of the operation. Meanwhile, the guide slot 323 may be used as a fastening member for bolting an inter-bus-bar (not shown) (the member for connection between modules) and the bus-bar terminal 320.

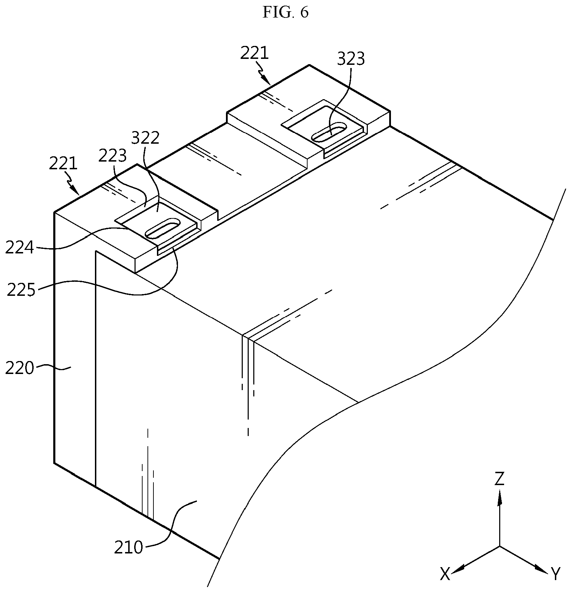

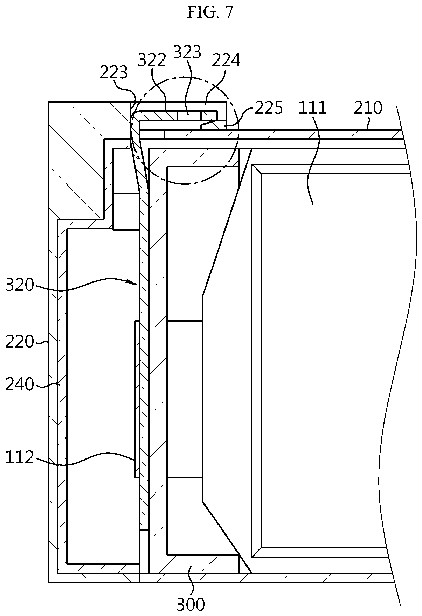

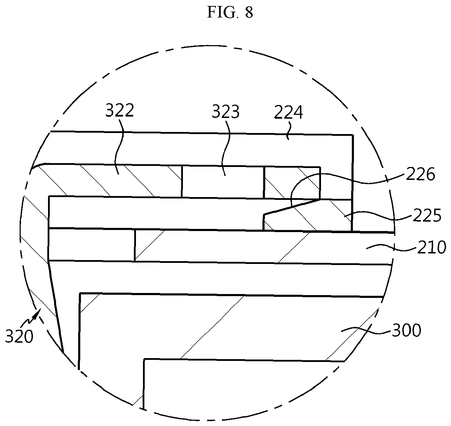

FIG. 6 is a partially perspective view of a battery module in which a bus-bar terminal and an end cover are coupled according to an embodiment of the present disclosure, FIG. 7 is a longitudinal cross-sectional view of a battery module in which a bus-bar terminal and an end cover are coupled according to an embodiment of the present disclosure, and FIG. 8 is an enlarged view of the upper section in FIG. 7.

The end cover 220 is coupled to the open end of the case body 210 so as to cover the assembly of the bus-bar frame 300, and protects the bus-bar frame 300 and various electrical components connected thereto from external impact, and the end cover 220 is also configured such that the upper end of the bus-bar terminal 320 is partially exposed. That is, the end cover 220 may be coupled to overlap a portion of the upper surface of the case body 210, and the end cover 220 may have a protrusion accommodation portion 221 that protrudes higher than the bending terminal portion 322 and accommodates the bending terminal portion 322.

The protrusion accommodation portion 221 may have an upper opening 222 on both sides of the case body 210 in the width direction. The protrusion accommodation portion 221 may include a first protruding step 223 formed to protrude upwards between the tip of the end cover 220 and the bending terminal portion 322, a pair of second protruding steps 224 that is disposed perpendicular to the first protruding step 223 and protrudes on both sides with the upper opening 222 located therebetween, and a fitting member 225 that connects the second protruding steps 224 to each other and is provided between the bending terminal portion 322 and the case body 210.

The first protruding step 223 is formed to protrude upwards between the tip of the end cover 220 and the bending terminal portion 322. The second protruding steps 224 are disposed perpendicular to the first protruding step 223 and protrude along both sides of the upper opening 222 interposed therebetween. As described above, the first protruding step 223 and the second protruding steps 224 formed to protrude upwards to be higher than the upper surface of the bending terminal portion 322 may form a flame path toward the center of the cell stack 110 or toward the inside of the case body 210. That is, when the flame makes an upward path, the first protruding step 223 and the second protruding step 224 may restrict the flame path from being established toward the rear of the cell stack 110 (in the - Y-axis direction) in FIG. 6.

The fitting member 225 connects the second protruding steps 224 to each other and is provided between the bending terminal portion 322 and the case body 210. This fitting member 225 may be inserted between the bending terminal portion 322 and the upper surface of the case body 210 to fill the gap therebetween, thereby minimizing the clearance of the bus-bar terminal 320, and supported by the bus-bar terminal 320 at one end thereof, thereby improving the bonding strength of the end cover 220 to the case body 210.

The fitting member 225 above may have a tapered section formed thereon, and the tapered section may guide some of the flame to be easily discharged. In addition, the tapered section may contribute to convenient assembly of the end cover 220 to the case body 210. That is, when assembling the end cover 220 in the state where the cell stack 110 is accommodated in the case body 210 and where the bus-bar frame 300 is assembled, the fitting member 225 may be easily coupled to the bending terminal portion 322 by fitting, and then the end cover 220 may be assembled to the case body 210, thereby securing ease of assembly.

According to this implemented configuration, the battery module according to the present disclosure is configured such that the opening through which the bus-bar terminal 320 is exposed is removed from the end cover 220 plate and relocated on the upper side of the case body 210 and such that the bus-bar terminal 320 is also exposed to the upper surface of the case body 210. This structural change of the bus-bar terminal 320 and the relocation of the opening of the end cover 220 may improve the flame path such that gas, flame, or the like generated from the battery cells 111 is directed toward the upper side and/or center of the case body 210. Accordingly, if a battery pack is configured using the battery module according to the present disclosure, it is possible to minimize direct heat damage to other battery modules (not shown) adjacent thereto even if gas or flame is generated in the battery module.

In addition, according to this implemented configuration, the battery module according to the present disclosure may reduce, when the initial flame is ejected due to a thermal event occurring therein, thermal damage to the battery cells of other adjacent battery modules and their electrode leads and bus-bars, thereby delaying heat propagation time between the battery modules included the battery pack. Therefore, when the internal ignition occurs in the battery module, the user may recognize it before the fire spreads and secure sufficient evacuation time in a safer situation.

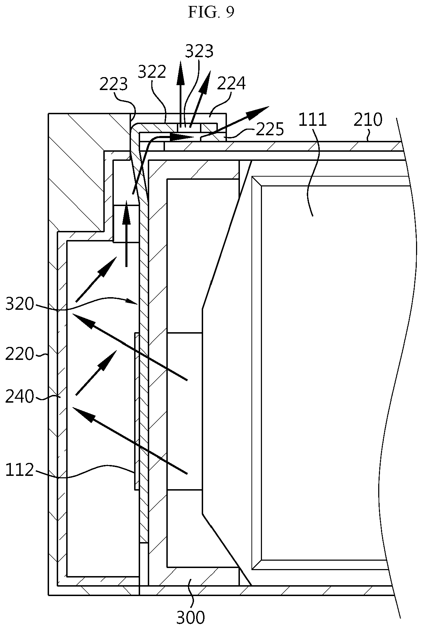

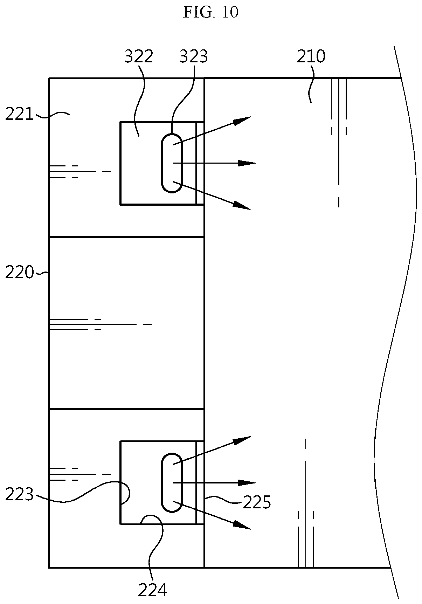

FIG. 9 is a diagram illustrating a flame ignition path by a bus-bar terminal and an end cover of a battery module according to an embodiment of the present disclosure, and FIG. 10 is a top view illustrating the directions of flames in battery modules according to an embodiment of the present disclosure.

Hereinafter, a flame path of an battery module with an enhanced flame path will be described with reference to FIGS. 3 to 8, 9, and 10.

If a thermal event occurs due to ignition in a specific battery cell 111, as shown in FIG. 9, venting gas, flame, and the like are discharged in one direction of the cell stack 110 (in the -Y-axis direction) and reach the inner wall of the end cover 220 via the bus-bar frame 300 and the bus-bar terminal 320.

At this time, an insulating cover is provided on the inner wall of the end cover 220, and no opening is formed on the side of the end cover 220 facing the bus-bars 300. Therefore, for example, no flame path is formed toward the front of the end cover 220 (in the -Y-axis direction in FIG. 3).

Next, if the flame is continuously discharged, the turbulent flame in the space between the bus-bar frame 300 and the inner wall of the end cover 220 forms a flame path in the upward direction, and then forms a flame path in the upward direction through the gap between overlapping sections between the end cover 220 and the upper surface of the case body 210.

Subsequently, the flame is discharged to the outside through the guide slot 323. At this time, the flame is guided by the first protruding step 223 and the second protruding step 224 and discharged, thereby limiting the flame path and establishing a discharge path in the upward direction or toward the center of the case body 210 (in the Y-axis direction) as shown in FIG. 10.

Additionally, some of the flame may be guided by the tapered section of the fitting member 225 to be easily discharged.

Through these steps, the opening through which the bus-bar terminal 320 is exposed is removed from the end cover 220 plate and relocated on the upper side of the case body 210, and the bus-bar terminal 320 is also bent to be exposed to the upper surface of the case body 210, so that this structural change of the bus-bar terminal 320 and the relocation of the opening of the end cover 220 may guide the flame path to be directed toward the upper side and center of the case body 210 even if gas, flame, or the like generated from the battery module 10 is discharged to the outside of the case body, thereby minimizing direct heat damage to other battery modules (not shown) disposed adjacent to the battery module.

Meanwhile, a battery pack (not shown) according to the present disclosure may include one or more battery modules described above. The battery pack according to the present disclosure may further include a master BMS (Battery Management System) for integrated control of charging and discharging of one or more battery modules, a current sensor, a fuse, and a pack case for accommodating the above-mentioned components.

The battery pack according to the present disclosure may be applied to energy storage systems or to vehicles such as electric scooters, electric vehicles, or hybrid vehicles.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

## Claims

1. A battery module comprising:
a cell stack accommodated inside a case body having at least one open side and comprising a plurality of battery cells stacked and disposed in one direction;
a bus-bar frame assembly comprising a bus-bar frame disposed at the front or rear of the cell stack, and a plurality of bus-bars mounted to the bus-bar frame and electrically connected to electrode leads of the battery cells; and
an end cover coupled to the open end of the case body so as to cover the bus-bar frame assembly,
wherein the plurality of bus-bars comprises a bus-bar terminal having an upper end exposed to the outside at least to be higher than the upper surface of the case body and configured to function as a module terminal, and
wherein the end cover is configured such that the upper end of the bus-bar terminal is partially exposed therethrough.

2. The battery module according to claim 1,
wherein the bus-bar terminal comprises:
a terminal body mounted to the bus-bar frame and electrically connected to the electrode lead of the battery cell; and
a bending terminal portion bent and extended from the top of the terminal body toward the center of the cell stack or the inside of the case body.

3. The battery module according to claim 2,
wherein the bending terminal portion is provided to protrude upwards to be higher than the upper surface of the case body.

4. The battery module according to claim 2,
wherein the end cover has a protrusion accommodation portion configured to protrude higher than the bending terminal portion and accommodate the bending terminal portion.

5. The battery module according to claim 2,
wherein the bending terminal portion has a guide slot formed on the plate surface thereof to guide the discharge of flame.

6. The battery module according to claim 4,
wherein the protrusion accommodation portion has an upper opening on both sides of the case body in the width direction.

7. The battery module according to claim 6,
wherein the protrusion accommodation portion adjacent to the upper opening comprises:
a first protruding step formed to protrude upwards between the tip of the end cover and the bending terminal portion;
a pair of second protruding steps disposed perpendicular to the first protruding step and provided to protrude on both sides with the upper opening located therebetween; and
a fitting member configured to connect the second protruding steps to each other and provided between the bending terminal portion and the case body.

8. The battery module according to claim 7,
wherein the fitting member has a tapered section provided for flame discharge.

9. A battery pack comprising the battery module according to any one of claims 1 to 8.

10. A vehicle comprising the battery pack according to claim 9.
